(19) Europäisches Patentamt
European Patent Office
Office européen des brevets

(11) **EP 3 956 698 B1**

(12) **EUROPEAN PATENT SPECIFICATION**

(45) Date of publication and mention
of the grant of the patent:
**14.02.2024 Bulletin 2024/07**

(21) Application number: **19734879.0**

(22) Date of filing: **16.04.2019**

(51) International Patent Classification (IPC):
**G01V 99/00** (2024.01)

(52) Cooperative Patent Classification (CPC):
**G01V 20/00**

(86) International application number:
**PCT/IB2019/000522**

(87) International publication number:
**WO 2020/212720 (22.10.2020 Gazette 2020/43)**

(54) **A METHOD FOR FORMING COARSE-SCALE 3D MODEL OF HETEROGENEOUS SEDIMENTARY STRUCTURES**

VERFAHREN ZUR FORMUNG EINES 3D-MODELLS IM GROBEN MASSSTAB VON HETEROGENEN SEDIMENTÄREN STRUKTUREN

PROCÉDÉ DE FORMATION D'UN MODÈLE 3D À ÉCHELLE GROSSIÈRE DE STRUCTURES SÉDIMENTAIRES HÉTÉROGÈNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.02.2022 Bulletin 2022/08**

(73) Proprietor: **TotalEnergies OneTech**
**92400 Courbevoie (FR)**

(72) Inventors:
• **MASSONNAT, Gérard**
**64018 Pau Cedex (FR)**
• **LEDEZ, David**
**64018 Pau Cedex (FR)**

(74) Representative: **Plasseraud IP**
**66, rue de la Chaussée d'Antin**
**75440 Paris Cedex 09 (FR)**

(56) References cited:
• **Anonymous: "Upscaling of grid properties in reservoir simulation - PetroWiki", , 12 June 2015 (2015-06-12), XP055654400, Retrieved from the Internet: URL:https://petrowiki.org/Upscaling_of_grid_properties_in_reservoir_simulation [retrieved on 2019-12-19]**

• **LOUIS J DURLOFSKY: "Upscaling and Gridding of Fine Scale Geological Models for Flow Simulation", PAPER PRESENTED AT THE INTERNATIONAL FORUM ON RESERVOIR SIMULATION,, vol. 8th Forum, 20 June 2005 (2005-06-20), page 59pp, XP007910993,**
• **JACQUEMYN CARL ET AL: "Surface-Based Geological Reservoir Modelling Using Grid-Free NURBS Curves and Surfaces", MATHEMATICAL GEOSCIENCES, SPRINGER BERLIN HEIDELBERG, BERLIN/HEIDELBERG, vol. 51, no. 1, 11 September 2018 (2018-09-11), pages 1-28, XP036665050, ISSN: 1874-8961, DOI: 10.1007/S11004-018-9764-8 [retrieved on 2018-09-11]**
• **K A LIE ET AL: "Successful Application of Multiscale Methods in a Real Reservoir Simulator Environment", 15 TH EUROPEAN CONFERENCE ON THE MATHEMATICS OF OIL RECOVERY, 29 August 2016 (2016-08-29), pages 1-21, XP055303858, DOI: 10.3997/2214-4609.201601893**

- Christine E Koltermann ET AL: "Heterogeneity in sedimentary deposits: A review of structure-imitating, process-imitating, and descriptive approaches", Water resources research, 1 September 1996 (1996-09-01), pages 2617-2658, XP055074635, DOI: 10.1029/96WR00025 Retrieved from the Internet: URL:http://onlinelibrary.wiley.com/store/1 0.1029/96WR00025/asset/wrcr7129.pdf?v=1&t= hk42u8f4&s=db48323f55fd2e9ae3d35bccc26945 b 1b3271636 [retrieved on 2013-08-08]
- CHEN Y ET AL: "A coupled local-global upscaling approach for simulating flow in highly heterogeneous formations", ADVANCES IN WATER RESOURCES, CML PUBLICATIONS, SOUTHAMPTON, GB, vol. 26, no. 10, 1 October 2003 (2003-10-01), pages 1041-1060, XP002405325, ISSN: 0309-1708, DOI: 10.1016/S0309-1708(03)00101-5
- R. K. ROMEU ET AL: "Calculation of Internodal Transmissivities in Finite Difference Models of Flow in Heterogeneous Porous Media", WATER RESOURCES RESEARCH., vol. 31, no. 4, 1 April 1995 (1995-04-01), pages 943-959, XP055654407, US ISSN: 0043-1397, DOI: 10.1029/94WR02422
- R. MOYEN ET AL: "3D-PARAMETERIZATION OF THE 3D GEOLOGICAL SPACE - THE GEOCHRON MODEL", 9TH EUROPEAN CONFERENCE ON THE MATHEMATICS OF OIL RECOVERY - CANNES, 30 August 2004 (2004-08-30), pages 1-8, XP055238016, http://www.earthdoc.org/publication/public ationdetails/?publication=1856

**Description**

FIELD OF THE INVENTION

The invention relates to a method, a program and a computer readable medium storing such a program for forming a coarse-scale geological model of sedimentary structures.

TECHNICAL BACKGROUND

Subsurface reservoirs are highly heterogeneous and complex formations, which need to be characterized precisely in order to allow proper estimation of the exploitable reserves, and provide information for appropriate localization of production wells.

In order to characterize reservoirs, it is known to create high-resolution geological models, which are often composed of millions of grid cells, each grid cell being assigned geological properties, for instance being assigned a rock type (sandstone, siltstone, shale), as well as petrophysical properties such as porosity and permeability.

The filling of these fine-scale models is based upon experimental data, acquired for example from onsite core drilling operations or logging.

Once this fine-scale model is obtained, it is usually not possible to directly perform computations thereon or numerical simulations, in acceptable delays, as the number of grid cells is extremely important ($10^7$-$10^8$ grid cells per model, each cell having dimensions of a few meters).

Therefore it is also known to perform upscaling of this fine-scale geological model to obtain a coarse-scale geological model, having less grid cells ($10^4$ - $10^6$ per model, each cell having dimensions of tens of meters), wherein the grid cells represent bigger volumes than the grid cells of the fine-scale model. Upscaling techniques comprise the computation of petrophysical properties of the coarse-scale model from the properties of the cells of the fine-scale model.

Upscaling of porosity can be performed quite simply, since an equivalent porosity value of a coarse-scale cell is an average of the porosity values of the fine-scale cells included in the coarse-scale cell.

However, computing equivalent permeability values is more complex as it usually implies solving a flow problem over a region included in the coarse-scale cell. In this context, it is sometimes very complex to take into account local heterogeneities of permeability, such as thin shale layers, which however impact the permeability of the whole region.

Petrowiki article "Upscaling of grid porperties in reservoir simulation" (https://petrowiki.spe.org/ Upscaling of_grid_properties in reservoir simulation) provides an overview of above mentioned upscaling methods.

In a previous approach of reservoir modelling, both the fine-scale model and the coarse-scale model comprised grid cells of cubic shape and constant dimensions. This approach however cannot faithfully represent sedimentary structures in which the boundaries between different rock types are not necessarily horizontal or vertical.

It has then been proposed by David M. Rubin et al., in Cross-Bedding, Bedforms, and Paleocurrents, ISBN (electronic): 9781565761018, SEPM Society for Sedimentary Geology, 1987 a reservoir modelling technique in which sedimentary layers are modelled as parametric surfaces, each surface corresponding to a boundary between two sedimentary layers of identical or different lithology.

This work allowed a better representation of complex geological structures, but it still has some drawbacks. In particular, representation of very thin layers, such as thin layers of shale evoked above, is not possible apart from adding parametric surfaces representing the boundaries of these layers. However, as these layers can have a thickness of a few millimeters only, taking into account this kind of layer can greatly increase the number of surfaces and hence of grid cells, which in turn makes it more complex to run simulations or computations on the model.

PRESENTATION OF THE INVENTION

In view of the above, there is a need for a simplified, yet more precise modelling method of sedimentary structures.

Accordingly, the present invention aims at providing an improved method for modelling sedimentary structures. In particular, the present invention aims at providing a modelling method which can take into account local heterogeneities in the sedimentary structures, especially local heterogeneities in the permeability values of the sedimentary structures.

To this end, the invention proposes a method for forming a coarse-scale three-dimensional geological model of sedimentary structures according to claim 1.

In embodiments, the sedimentary surfaces are meshed with triangles, and the step of forming the unstructured grid comprises forming a plurality of tetraedric cells between two successive sedimentary surfaces, such that one face of a tetraedric cell corresponds to a triangular mesh of a sedimentary surface, and the summit of the tetraedric cell belongs to an adjacent sedimentary surface.

The transmissivity reduction coefficient is comprised between 0 and 1, and a modeled sedimentary surface having a transmissivity reduction coefficient of 0 may represent a thin shale layer.

In embodiments, the step of attributing petrophysical parameters to each cell of the grid of the fine-scale model comprises:

- determining a number of lithology types within the fine-scaled model and defining each lithology type,

- determining a distribution pattern of the lithology types within the grid, and
- attributing to each cell petrophysical parameters according to the determined distribution pattern.

The petrophysical parameters preferably comprise at least porosity and permeability values.

In embodiments, the upscaling is performed by providing a coarse-scale grid comprising a plurality of cells, each cell having dimensions greater than a plurality of cells of the fine-scale model, and the upscaling of the permeability values is performed by computing equivalent fluid flow values of the cells of the coarse-scale grid from fluid flow values of the cells of the fine-scale grid and inferring equivalent permeability values of the coarse-scale grid.

In an embodiment, the computation of the equivalent permeability values is performed by:

- numerically solving-Darcy's equation to obtain, in each cell of the fine-scale model, a fluid head in the cell, said fluid head being determined from fluid head values at the limits of the fine-scale model, inferring a fluid flow value in each cell of the fine-scale model,
- computing, from the fluid flow values in each cell and the transmissivity reduction coefficients, an equivalent fluid flow value in a cell of the coarse-scale grid comprising the cells of the fine-scale grid, and
- inferring an equivalent permeability value of the cell of the coarse-scale grid from the equivalent fluid flow value.

In embodiments, the modelling of sedimentary surfaces comprises :

- selecting a bedform type to be modelled among a library of previously established bedform types, wherein each bedform type defines a disposition of a plurality of sedimentary surfaces, and
- parameterizing the selected bedform type.

The parameterizing of the bedform type may be performed according to at least one of the following parameters:

- wavelength of a cyclic geometric pattern of the sedimentary surfaces included in the bedform type,
- Steepness of said cyclic geometric pattern,
- Angular orientation of said cyclic geometric pattern,
- Number of sedimentary surfaces, and
- Mean thickness between two adjacent sedimentary surfaces.

According to another object, a computer program product is disclosed, comprising code instructions for performing the method according to the description above, when executed by a computer.

According to another object; a non-transitory computer readable storage medium is disclosed, having stored thereon a computer program comprising program instructions, the computer program being loadable into a computer and adapted to cause the computer to carry out the steps of the method described above, when the computer program is run by the computer.

The present invention proposes a method for modelling complex geological structures, by forming a fine-scale model of the structures in which surfaces are used as boundaries between layers of rocks, but also to represent thin layers of shale which can reduce the global permeability of the structure. To this end, surfaces are attributed a transmissivity reduction coefficient. The transmissivity reduction coefficient is comprised between 0 and 1 and, when equal to 1, allows representing thin shale layers with only a parametric surface.

Upscaling can then be performed based on transmissivity values of the fine scale grid cells, and the local heterogeneities in transmissivity or permeability are taken into account in a coarse-scale model.

DESCRIPTION OF THE DRAWINGS

Other features and advantages of the invention will be apparent from the following detailed description given by way of non-limiting example, with reference to the accompanying drawings, in which:

- Figure 1 schematically represents the main step of a method for forming a coarse-scale three dimensional geological model of sedimentary structures according to an embodiment of the invention.
- Figures 2a to 2f show exemplary sedimentary surfaces delimiting layers of lithology,
- Figure 3a schematically shows an exemplary fine grid, and Figure 3b schematically shows a corresponding coarse-scale grid obtained from the fine grid of figure 3a
- Figure 4 schematically shows a computer for implementation of the method.

DETAILED DESCRIPTION OF AT LEAST AN EMBODIMENT OF THE INVENTION

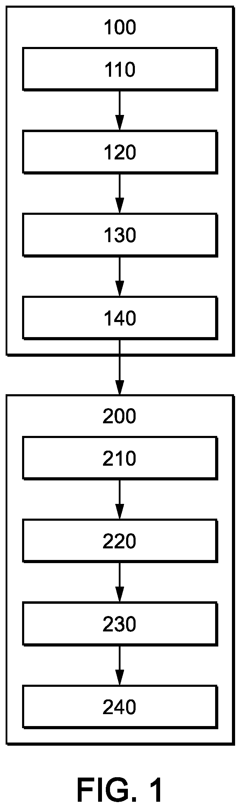

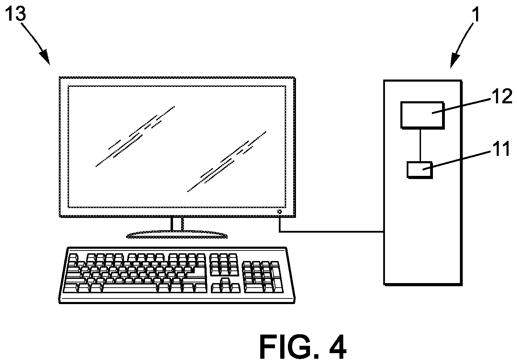

With reference to figure 1, the main steps of a method for forming a coarse-scale three-dimensional geological model of sedimentary structures will now be described. As shown in figure 4, this method is implemented by a system 1, comprising a computer 11 which can be for instance a processor, microprocessor, controller, etc., executing code instructions stored in a memory 12. Preferably, this method is implemented as a software application having an interface which can be displayed on a screen 13, allowing a user to select parameters for personalizing the three-dimensional model to be built.

This method allows forming a coarse-scale model comprising a grid having a plurality of cells, in which each cell is assigned petrophysical parameters which faithfully take into account local values of petrophysical parameters, including local heterogeneities in permeability values of the sedimentary structure.

A first step 100 of the method is the formation of a fine-scale three-dimensional model of the sedimentary structures, the model comprising a grid having a plurality of cells, wherein each cell is assigned petrophysical parameters.

Step 100 comprises a first substep 110 of modeling a plurality of sedimentary surfaces, representing the boundaries between superposed layers of lithology. The disposition of a stack of sedimentary surfaces is also called bedform. For some very thin layers of lithology, and as will be disclosed in more details below, a modeled surface may represent the whole layer itself. This applies for layers having a thickness of a few centimeters maximum.

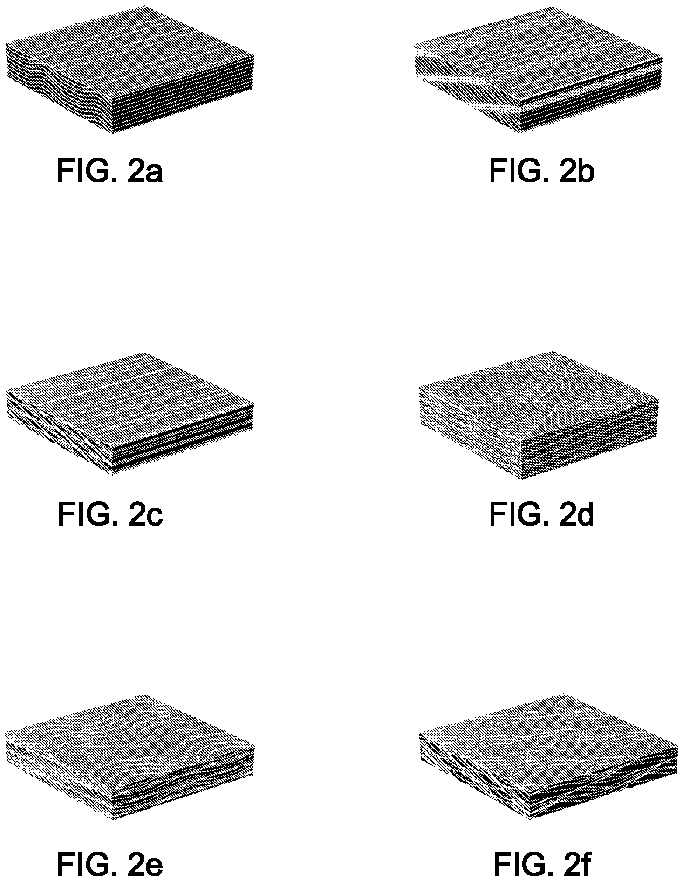

The modeling of the surfaces is preferably performed according to the method disclosed by David M. Rubin et al., in Cross-Bedding, Bedforms, and Paleocurrents, ISBN (electronic): 9781565761018, SEPM Society for Sedimentary Geology, 1987, cited above. This method allows modeling a plurality of bedform types, such as the number of examples illustrated in figures 2a to 2f, where each bedform type defines a disposition of a plurality of sedimentary surfaces. Preferably, a library of bedform types is stored in the memory and can be chosen by the user.

Then, once a bedform type is chosen, a number of parameters may be used to model each bedform type as required, such that, for instance, a wavelength of a cyclic geometric pattern of the sedimentary surfaces included in the bedform type, a maximum steepness of said cyclic geometric pattern, an angular orientation, relative to the North, of said cyclic geometric pattern. The model is also parameterized with a number of surfaces to be formed in the model and a mean thickness between two adjacent surfaces. The total thickness of the bedform may also be parameterized, and hence the number and mean thickness of the sedimentary surfaces are constrained by this total thickness.

The surfaces are further meshed with a triangular pattern, to form a plurality of two-dimensional triangular meshes. The size of the triangular meshes can be set by the user.

Step 100 then comprises a substep 120 of forming an unstructured grid comprising a plurality of three dimensional cells, wherein each cell extends between two successive sedimentary surfaces. The unstructured grid is obtained by first forming a plurality of tetraedric cells between the sedimentary surfaces, such that at least one face of a cell belongs to one sedimentary surface. Preferably, each cell extends between two sedimentary surfaces, having one face corresponding to one of the triangular meshes of a sedimentary surface, and the summit belonging to an adjacent sedimentary surface.

Optionnally, step 120 then comprises recombining the formed tetraedric cells to obtain hexaedric cells extending between two adjacent sedimentary surfaces. Cell recombination is well known to the skilled person and can for instance be implemented according to the method disclosed in Arnaud Botella : "Génération de maillages non structurés volumiques de modèles géologiques pour la simulation de phénomènes physiques, Géophysique [physics.geo-ph]. Université de Lorraine, 2016. <NNT : 2016LORR0097>.

At the end of this step a fine-scale grid is thus obtained, in which each cell is defined between two adjacent sedimentary surfaces.

Step 100 of forming the fine-scale model then comprises a substep 130 of attributing petrophysical parameters to each three-dimensional cell of the grid. To this end, the user may determine a number of lithologies constituting the model of sedimentary structure, and define each lithology, so as to attribute a lithology to the cells belonging to each layer extending between two adjacent sedimentary surfaces.

For instance, the user may select one or two lithologies, such as:

- Sandstone,
- Siltstone,
- Shale, etc.

According to the number of lithologies, the user may further define a distribution pattern of the various lithologies among the model. The distribution pattern is applied to the layers between adjacent sedimentary surfaces. Examples of distribution patterns for two lithologies are as follows:

- Alternating layers, with a first number of layer(s) of the first lithology alternating with a second number of layer(s) of the second lithology,
- Cyclic pattern, comprising a distribution of alternating layers of the two lithologies, repeating itself,
- Progressive preponderance pattern, comprising a distribution of alternating layers of the two lithologies progressively moving towards one lithology being preponderant over the other, etc.

According to this pattern, each cell belonging to a layer between successive sedimentary surface is then attributed a lithology and hence petrophysical parameters defined by the lithology. The petrophysical parameters comprise at least values of porosity, permeability.

Last, during step 140, each sedimentary surface is also assigned a parameter which is a transmissivity reduction coefficient, comprised between 0 and 1. A coefficient equal to 1 implies no reduction on the transmissivity between the cells located on both sides on the sedimentary surface. On the other hand, a transmissivity reduction coefficient equal to 0 corresponds to an impervious layer, and is advantageously used to model thin shale layers, which can be fully impervious despite a reduced thickness. The value of the transmissivity reduction coefficient is assigned to each sedimentary surface by a user according to its knowledge of the sedimentary structure to be modelled. According to a preferred embodiment, the value of each transmissivity reduction coefficient is set by default at 1 and can be selectively changed by the user.

Substep 140 may be performed at any time after substep 110, and not exclusively after step 130.

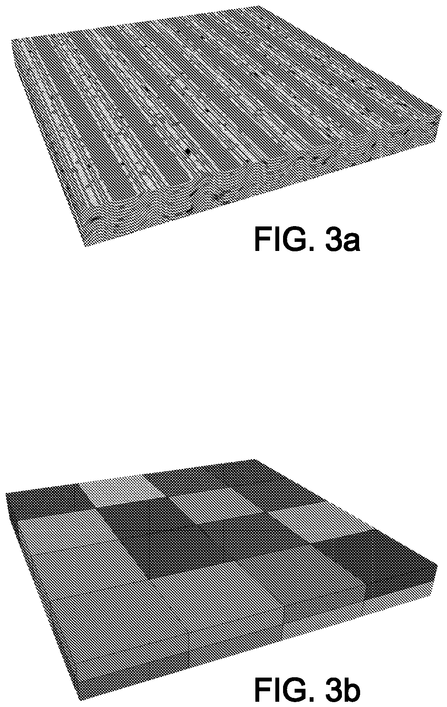

With reference to figure 3a, an example of a fine-scale three-dimensional model obtained at the end of step 100 is shown.

The method then comprises a step 200 of upscaling this fine-scale model to obtain a coarse-scale three dimensional model, an example of which is shown in Figure 3b. The coarse-scale three dimensional model comprises a coarse-scale three dimensional grid which cells are preferentially parallelepipeds

The dimensions of the cells of the three-dimensional grid are preliminary selected by a user, either at the beginning of step 200 or even before step 100. The dimensions of the cells of the coarse-scale grid are greater than those of the fine-scale grids. According to an example, a cell of the coarse-scale grid may have lateral dimensions of several tens of meters, up to hundreds of meters, and a height of at least several meters, up to tens or hundreds of meters, whereas the dimensions of a cell of a fine-scale grid are about between some tens of centimeters and some meters.

The upscaling 200 then comprises the determination of equivalent petrophysical parameters assigned to each cell of the coarse-scale model, the equivalent petrophysical parameters being determined based on the parameters assigned to the cells of the fine-scale model, and the transmissivity reduction coefficients of the sedimentary surfaces, in order to take into account local heterogeneities in transmissivity or permeability.

The equivalent petrophysical parameters assigned to a cell of the coarse-scale model comprise at least an equivalent porosity value, and an equivalent permeability value. Regarding the equivalent porosity value, it is computed as a mean value, over the cells of the fine-scale model comprised in the cell of the coarse-scale model. Regarding the equivalent permeability value, it is solved by numerically solving Darcy's equation describing the flow of a fluid through a porous medium, applied on unstructured grids, and which reads as follows:

$$div(\vec{q}) = 0 \; within \; \Omega$$

$$with \; \vec{q} = -K\nabla h$$

Where $\Omega$ is the computation domain, if is a three-dimensional method of the flow of fluid within the domain, K is the permeability value of the domain, and h is a head gradient vector.

This equation is discretized on the boundaries conditions of the fine-scale grid thanks to a mixed hybrid finite elements method, in order to obtain a sparse linear matrix system:

$$\begin{bmatrix} a_{11} & \cdots & a_{1n} \\ \vdots & \ddots & \vdots \\ a_{n1} & \cdots & a_{nn} \end{bmatrix} \times \begin{bmatrix} h_1 \\ \dots \\ h_n \end{bmatrix} = \begin{bmatrix} h_{lim1} \\ \dots \\ h_{limn} \end{bmatrix}$$

In this system, n is the number of cells in the fine-scale grid, $a_{ij}$ represents the permeability values of the cells of the fine-scale grid and the links between the permeability values of adjacent cells of the grid, $h_{1\ldots n}$ represents the head in each cell of the fine-scale grid, and $h_{lim1\ldots n}$ represents imposed conditions at the limits of the grid, therefore most values of $h_{limi}$ are equal to 0 except on the limits of the grid. This matrix system is solved during a substep 210 using a multigrid solving algorithm to obtain a value of head $h_i$ in each cell of the fine-scale grid, which in turns allows computing during substep 220 a value of fluid flow if through the cell, thanks to the above equation.

The fluid flow Q through a face, of surface S, of a cell of the coarse-scale grid, the face being orthogonal to the direction of the flow, is then computed during substep 230 by:

$$Q = \sum_{s} \vec{q_s} (MultS).S$$

Where s designates all the sedimentary surfaces comprised within the cell of the coarse-scale grid, and Mults is the transmissivity reduction coefficient associated to a sedimentary surface S.

The equivalent permeability of a cell of the coarse-scale grid is then computed during substep 240 by:

$$K_{eq} = \frac{Q}{S\nabla h}$$

This computation is performed along the three directions of the coarse-scale grid to obtain all the values of the permeability tensor.

Two types of boundaries conditions may be used for computing the equivalent permeability.

According to a first embodiment, a constant pressure difference is imposed between the two opposite faces of the cell of the coarse-scale grid orthogonal the fluid flow direction, assuming that the other faces, parallel to the fluid flow direction, are watertight. In this configuration, only the computation of the diagonal terms of the permeability tensor is possible.

According to a second embodiment, a constant pressure difference is imposed between the two opposite faces of the cell of the coarse-scale grid orthogonal the fluid flow direction, imposing a linear pressure difference on all the faces which are parallel to the fluid flow direction. This configuration leads to computing all the terms, including the crossed terms, of the permeability tensor.

Thus it is apparent that parameterizing the sedimentary surfaces with a transmissivity reduction coefficient, and taking into account this coefficient in the computation of an equivalent permeability value, allows taking into account local heterogeneities of permeability. It can even allow taking into account thin watertight layers which otherwise would not be modeled as they would imply too much computational needs.

**Claims**

1. A method for forming a coarse-scale three-dimensional geological model of sedimentary structures, the method being implemented by a computer (11), and comprising:

   - forming (100) a fine-scale three dimensional model of the sedimentary structures, by implementing steps of:

     ◦ modeling (110) a plurality of meshed sedimentary surfaces, the plurality of meshed sedimentary surfaces delimiting superposed layers of lithology,
     ◦ forming (120) an unstructured grid comprising a plurality of cells, wherein each cell extends between at least two sedimentary surfaces,
     ◦ attributing (130) petrophysical parameters to each cell of the grid, based on experimental data of the sedimentary structures, **characterized in**
     ◦ attributing (140), to at least some of the sedimentary surfaces, a transmissivity reduction coefficient comprised between 0 and 1, the transmissivity reduction coefficient being a parameter describing an imperviousness degree of the sedimentary surface to which it is attributed, a transmissivity reduction coefficient equal to 0 corresponding to an impervious surface, and

   - upscaling (200) the fine-scale three dimensional model to obtain a coarse-scale three dimensional model comprising a plurality of cells, wherein each cell is associated to petrophysical parameters determined from the petrophysical parameters of the fine-scale model, and from the transmissivity reduction coefficient of the sedimentary surfaces.

2. A method according to claim 1, wherein the sedimentary surfaces are meshed with triangles, and the step of forming the unstructured grid comprises forming a plurality of tetraedric cells between two successive sedimentary surfaces, such that one face of a tetraedric cell corresponds to a triangular mesh of a sedimentary surface, and the summit of the tetraedric cell belongs to an adjacent sedimentary surface.

3. A method according to claim 1 or 2, wherein a modeled sedimentary surface having a transmissivity reduction coefficient of 0 represents a thin shale layer.

4. A method according to any of the preceding claims, wherein the step of attributing petrophysical parameters to each cell of the grid of the fine-scale (130) model comprises :

   - determining a number of lithology types within the fine-scaled model and defining each lithology type,
   - determining a distribution pattern of the lithology types within the grid, and
   - attributing to each cell petrophysical parameters according to the determined distribution pattern.

5. A method according to any of the preceding claims, wherein the petrophysical parameters comprise at least porosity and permeability values.

6. A method according to claim 5, wherein the upscaling (200) is performed by providing a coarse-scale grid comprising a plurality of cells, each cell having dimensions greater than a plurality of cells of the fine-scale model, and the upscaling of the permeability values is performed by computing equivalent fluid flow (230) values of the cells of the coarse-scale grid from fluid flow values of the cells of the fine-scale grid and inferring (240) equivalent permeability values of the coarse-scale grid.

7. A method according to claim 6, wherein the computation (240) of the equivalent permeability values is performed by:

   - numerically solving-Darcy's equation (210) to obtain, in each cell of the fine-scale model, a fluid head in the cell, said fluid head being determined from fluid head values at the limits of the fine-scale model, inferring a fluid flow value (220) in each cell of the fine-scale model,
   - computing (230), from the fluid flow values in each cell and the transmissivity reduction coefficients, an equivalent fluid flow value in a cell of the coarse-scale grid comprising the cells of the fine-scale grid, and

Inferring (240) an equivalent permeability value of the cell of the coarse-scale grid from the equivalent fluid flow value.

8. A method according to any of the preceding claims, wherein the modelling (110) of sedimentary surfaces comprises :

    - selecting a bedform type to be modelled among a library of previously established bedform types, wherein each bedform type defines a disposition of a plurality of sedimentary surfaces, and

    - parameterizing the selected bedform type.

9. A method according to claim 9, wherein the parameterizing of the bedform type is performed according to at least one of the following parameters:

    - wavelength of a cyclic geometric pattern of the sedimentary surfaces included in the bedform type,
    - Steepness of said cyclic geometric pattern,
    - Angular orientation of said cyclic geometric pattern,
    - Number of sedimentary surfaces, and
    - Mean thickness between two adjacent sedimentary surfaces.

10. A computer program product comprising code instructions for performing the method according to any of the preceding claims, when executed by a computer (11).

11. A non-transitory computer readable storage medium, having stored thereon a computer program comprising program instructions, the computer program being loadable into a computer (11) and adapted to cause the computer to carry out the steps of any of claims 1 to 9, when the computer program is run by the computer.

**Patentansprüche**

1. Verfahren zum Bilden eines grobskaligen dreidimensionalen geologischen Modells von Sedimentstrukturen, wobei das Verfahren durch einen Computer (11) implementiert wird und umfasst:

    - Bilden (100) eines feinskaligen dreidimensionalen Modells der Sedimentstrukturen durch Implementieren der folgenden Schritte:

        ◦ Modellieren (110) einer Mehrzahl vermaschter Sedimentoberflächen, wobei die Mehrzahl vermaschte Sedimentoberflächen überlagerte Lithologieschichten begrenzt,
        ◦ Bilden (120) eines unstrukturierten Rasters, welches eine Mehrzahl von Zellen umfasst, wobei sich jede Zelle zwischen wenigstens zwei Sedimentoberflächen erstreckt,
        ◦ Zuweisen (130) petrophysikalischer Parameter zu jeder Zelle des Rasters auf Grundlage experimenteller Daten der Sedimentstrukturen,
        **gekennzeichnet durch**
        ◦ Zuweisen (140) eines Durchlässigkeitsverringerungskoeffizienten zwischen 0 und 1 zu wenigstens einigen der Sedimentoberflächen, wobei der Durchlässigkeitsverringerungskoeffizient ein Parameter ist, welcher einen Dichtigkeitsgrad der Sedimentoberfläche beschreibt, welcher er zugewiesen ist, wobei ein Durchlässigkeitsverringerungskoeffizient gleich 0 einer undurchlässigen Fläche entspricht, und

    - Hochskalieren (200) des feinskaligen dreidimensionalen Modells, um ein grobskaliges dreidimensionales Modell zu erhalten, welches eine Mehrzahl von Zellen umfasst, wobei jede Zelle petrophysikalischen Parametern zugeordnet wird, welche aus den petrophysikalischen Parametern des feinskaligen Modells und aus dem Durchlässigkeitsverringerungskoeffizienten der Sedimentoberflächen bestimmt werden.

2. Verfahren nach Anspruch 1, wobei die Sedimentoberflächen mit Dreiecken vermascht sind und der Schritt des Bildens des unstrukturierten Rasters ein Bilden einer Mehrzahl tetraedrischer Zellen zwischen aufeinanderfolgenden Sedimentoberflächen umfasst, so dass eine Fläche einer tetraedrischen Zelle einer dreieckigen Masche einer Sedimentoberfläche entspricht und der Gipfel der tetraedrischen Zelle zu einer benachbarten Sedimentoberfläche gehört.

3. Verfahren nach Anspruch 1 oder 2, wobei eine modellierte Sedimentoberfläche, welche einen Durchlässigkeitsverringerungskoeffizienten von 0 aufweist, eine dünne Schieferschicht darstellt.

4. Verfahren nach einem der vorhergehenden Ansprüche, wobei der Schritt des Zuweisens (130) petrophysikalischer Parameter zu jeder Zelle des Rasters des feinskaligen Modells umfasst:

    - Bestimmen einer Anzahl von Lithologietypen innerhalb des feinskaligen Modells und Definieren jedes Lithologietyps,
    - Bestimmen eines Verteilungsmusters der Lithologietypen innerhalb des Rasters und

- Zuweisen petrophysikalischer Parameter gemäß dem bestimmten Verteilungsmuster zu jeder Zelle.

5. Verfahren nach einem der vorhergehenden Ansprüche, wobei die petrophysikalischen Parameter wenigstens Porositäts- und Permeabilitätswerte umfassen.

6. Verfahren nach Anspruch 5, wobei das Hochskalieren (200) durchgeführt wird durch ein Bereitstellen eines grobskaligen Rasters, welches eine Mehrzahl von Zellen umfasst, wobei jede Zelle Abmessungen aufweist, welche größer sind als eine Mehrzahl von Zellen des feinskaligen Modells, und das Hochskalieren der Permeabilitätswerte durchgeführt wird durch ein Berechnen (230) äquivalenter Fluidströmungswerte der Zellen des grobskaligen Rasters aus Fluidströmungswerten der Zellen des feinskaligen Rasters und ein Ableiten (240) äquivalenter Permeabilitätswerte des grobskaligen Rasters.

7. Verfahren nach Anspruch 6, wobei die Berechnung (240) der äquivalenten Permeabilitätswerte durchgeführt wird durch:

- eine numerische Lösung einer Gleichung von Darcy (210), um in jeder Zelle des feinskaligen Modells einen Fluidkopf in der Zelle zu erhalten, wobei der Fluidkopf aus Fluidkopfwerten an den Grenzen des feinskaligen Modells bestimmt wird,
Ableiten (220) eines Fluidströmungswerts (220) in jeder Zelle des feinskaligen Modells,
- Berechnen (230) aus den Fluidströmungswerten in jeder Zelle und den Durchlässigkeitsverringerungskoeffizienten eines äquivalenten Fluidströmungswerts in einer Zelle des grobskaligen Rasters, welche die Zellen des feinskaligen Rasters umfasst, und

Ableiten (240) eines äquivalenten Permeabilitätswerts der Zelle des grobskaligen Rasters aus dem äquivalenten Fluidströmungswert.

8. Verfahren nach einem der vorhergehenden Ansprüche, wobei das Modellieren (110) von Sedimentoberflächen umfasst:

- Auswählen eines zu modeliierenden Bettformtyps aus einer Bibliothek zuvor festgelegter Bettformtypen, wobei jeder Bettformtyp eine Anordnung einer Mehrzahl von Sedimentoberflächen definiert, und
- Parametrieren des ausgewählten Bettformtyps.

9. Verfahren nach Anspruch 9, wobei das Parametrieren des Bettformtyps gemäß wenigstens einem der folgenden Parameter durchgeführt wird:

- Wellenlänge eines zyklischen geometrischen Musters der in dem Bettformtyp umfassten Sedimentoberflächen,
- Steilheit des zyklischen geometrischen Musters,
- Winkelorientierung des zyklischen geometrischen Musters,
- Anzahl von Sedimentoberflächen und
- mittlere Dicke zwischen zwei benachbarten Sedimentoberflächen.

10. Computerprogrammprodukt, umfassend Codeanweisungen zum Durchführen des Verfahrens nach einem der vorhergehenden Ansprüche, wenn es durch einen Computer (11) ausgeführt wird.

11. Nicht transitorisches computerlesbares Speichermedium, welches ein darauf gespeichertes Computerprogramm aufweist, welches Programmanweisungen umfasst, wobei das Computerprogramm in einen Computer (11) ladbar ist und dazu eingerichtet ist, den Computer zu veranlassen, die Schritte nach einem der Ansprüche 1 bis 9 auszuführen, wenn das Computerprogramm durch den Computer ausgeführt wird.

**Revendications**

1. Procédé de formation d'un modèle géologique tridimensionnel à échelle grossière de structures sédimentaires, le procédé étant mis en oeuvre par un ordinateur (11), et comprenant :

- la formation (100) d'un modèle tridimensionnel à échelle fine des structures sédimentaires, en mettant en oeuvre les étapes suivantes :

∘ la modélisation (110) d'une pluralité de surfaces sédimentaires maillées, la pluralité de surfaces sédimentaires maillées délimitant des couches superposées de lithologie,
∘ la formation (120) d'une grille non structurée comprenant une pluralité de cellules, dans lequel chaque cellule s'étend entre au moins deux surfaces sédimentaires,
∘ l'attribution (130) de paramètres pétrophysiques à chaque cellule de la grille, sur la base de données expérimentales des structures sédimentaires,
**caractérisé par**
∘ l'attribution (140), à au moins certaines des surfaces sédimentaires, d'un coefficient de réduction de transmissivité compris entre 0 et 1, le coefficient de réduction de transmissivité étant un paramètre décrivant un degré d'imperméabilité de la surface sédimentaire à laquelle il est attribué, un coefficient de réduction de transmissivité égal à 0 correspondant à une surface imperméable, et

- la mise à l'échelle supérieure (200) du modèle tridimensionnel à échelle fine pour obtenir un modèle tridimensionnel à échelle grossière comprenant une pluralité de cellules, dans lequel chaque cellule est associée à des paramètres pétrophysiques déterminés à partir des paramètres pétrophysiques du modèle à échelle fine, et à partir du coefficient de réduction de transmissivité des surfaces sédimentaires.

2. Procédé selon la revendication 1, dans lequel les surfaces sédimentaires sont maillées avec des triangles, et l'étape de formation de la grille non structurée comprend la formation d'une pluralité de cellules tétraédriques entre deux surfaces sédimentaires successives, de telle sorte qu'une face d'une cellule tétraédrique corresponde à un maillage triangulaire d'une surface sédimentaire, et que le sommet de la cellule tétraédrique appartienne à une surface sédimentaire adjacente.

3. Procédé selon la revendication 1 ou 2, dans lequel une surface sédimentaire modélisée ayant un coefficient de réduction de transmissivité de 0 représente une fine couche de schiste.

4. Procédé selon l'une quelconque des revendications précédentes, dans lequel l'étape d'attribution de paramètres pétrophysiques à chaque cellule de la grille du modèle à échelle fine (130) comprend :

- la détermination d'un nombre de types de lithologie au sein du modèle à échelle fine et la définition de chaque type de lithologie,
- la détermination d'un profil de distribution des types de lithologie à l'intérieur de la grille, et
- l'attribution à chaque cellule de paramètres pétrophysiques en fonction du profil de distribution déterminé.

5. Procédé selon l'une quelconque des revendications précédentes, dans lequel les paramètres pétrophysiques comprennent au moins des valeurs de porosité et de perméabilité.

6. Procédé selon la revendication 5, dans lequel la mise à l'échelle supérieure (200) est réalisée en fournissant une grille à échelle grossière comprenant une pluralité de cellules, chaque cellule ayant des dimensions supérieures à une pluralité de cellules du modèle à échelle fine, et la mise à l'échelle supérieure des valeurs de perméabilité est réalisée en calculant des valeurs d'écoulement de fluide équivalent (230) des cellules de la grille à grande échelle à partir de valeurs d'écoulement de fluide des cellules de la grille à échelle fine et en déduisant (240) des valeurs de perméabilité équivalente de la grille à échelle grossière.

7. Procédé selon la revendication 6, dans lequel le calcul (240) des valeurs de perméabilité équivalente est réalisé par :

- la résolution numérique de l'équation de Darcy (210) pour obtenir, dans chaque cellule du modèle à échelle fine, une hauteur de fluide dans la cellule, ladite hauteur de fluide étant déterminée à partir de valeurs de hauteur de fluide aux limites du modèle à échelle fine, en déduisant une valeur d'écoulement de fluide (220) dans chaque cellule du modèle à échelle fine,
- le calcul (230), à partir des valeurs d'écoulement de fluide dans chaque cellule et des coefficients de réduction de transmissivité, d'une valeur d'écoulement de fluide équivalent dans une cellule de la grille à échelle grossière comprenant les cellules de la grille à échelle fine, et

la déduction (240) d'une valeur de perméabilité équivalente de la cellule de la grille à échelle grossière à partir de la valeur d'écoulement de fluide équivalent.

8. Procédé selon l'une quelconque des revendications précédentes, dans lequel la modélisation (110) de surfaces sédimentaires comprend :

- la sélection d'un type de forme de lit à modéliser parmi une banque de types de forme de lit préalablement établis, dans lequel chaque type de forme de lit définit une disposition d'une pluralité de surfaces sédimentaires, et
- le paramétrage du type de forme de lit sélectionné.

9. Procédé selon la revendication 9, dans lequel le paramétrage du type de forme de lit est réalisé selon au moins l'un des paramètres suivants :

- la longueur d'onde d'un motif géométrique cyclique des surfaces sédimentaires incluses dans le type de forme de lit,
- la pente dudit motif géométrique cyclique,
- l'orientation angulaire dudit motif géométrique cyclique,
- le nombre de surfaces sédimentaires, et
- l'épaisseur moyenne entre deux surfaces sédimentaires adjacentes.

**10.** Produit de programme informatique comprenant des instructions de code pour mettre en oeuvre le procédé selon l'une quelconque des revendications précédentes, quand il est exécuté par un ordinateur (11).

**11.** Support de stockage non transitoire lisible par ordinateur, sur lequel est stocké un programme informatique comprenant des instructions de programme, le programme informatique pouvant être chargé dans un ordinateur (11) et adapté pour amener l'ordinateur à exécuter les étapes de l'une quelconque des revendications 1 à 9, quand le programme informatique est exécuté par l'ordinateur.

FIG. 1

FIG. 2a

FIG. 2b

FIG. 2c

FIG. 2d

FIG. 2e

FIG. 2f

FIG. 3a

FIG. 3b

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAVID M. RUBIN et al.** Cross-Bedding, Bedforms, and Paleocurrents. *SEPM Society for Sedimentary Geology,* 1987, ISBN 9781565761018